# EUROPEAN PATENT SPECIFICATION

(11) **EP 1 445 133 B1**
(45) Date of publication and mention of the grant of the patent: **28.03.2007**
(21) Application number: 04002482.0
(22) Date of filing: 04.02.2004
(51) Int. Cl.: B60H 1/00

(54) **Airconditioning system for automobiles**
Klimaanlage für Kraftfahrzeugen
Dispositif de climatisation d'un véhicule automobile

(30) Priority: 10.02.2003 JP 2003031904
(43) Date of publication of application: 11.08.2004
(73) Proprietor: Zexel Valeo Climate Control Corporation, Ohsato-gun, Saitama (JP)
(72) Inventor: Araki, Daisuke c/o Zexel Climate Control Corp., Osato-gun, saitama (JP); Mouri, Toshikatsu c/o Zexel Valeo Climate Control, Osato-gun, Saitama (JP); Ikeda, Katsuyuki c/o Zexel Valeo Climate Corp., Osato-gun, Saitama (JP)
(74) Representative: Degwert, Hartmut

(56) References cited:
- EP-A- 1 247 667
- DE-A1- 19 826 990
- US-A1- 2002 157 811
- US-B1- 6 368 207

## Description

The present invention relates to an airconditioning system for automobiles, having a baffle plate located at a position at which warm air and cool air to be mixed together join each other.

The development of a so-called baffle plate 11 provided in an airconditioning system for automobiles at a position at which a cool air passage and a warm air passage join to improve the air mixing performance by alternately generating a cool air layer and a warm air layer in the related art has made significant progress (see Japanese Unexamined Patent Publication No. 2002-59726).

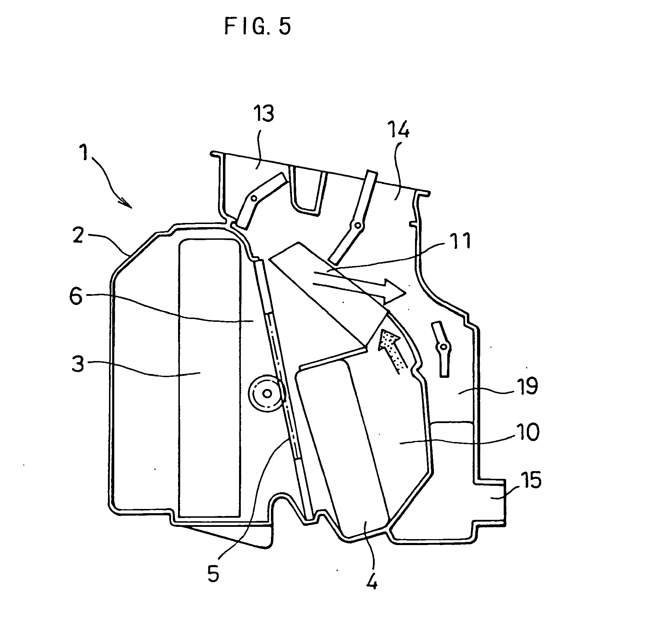

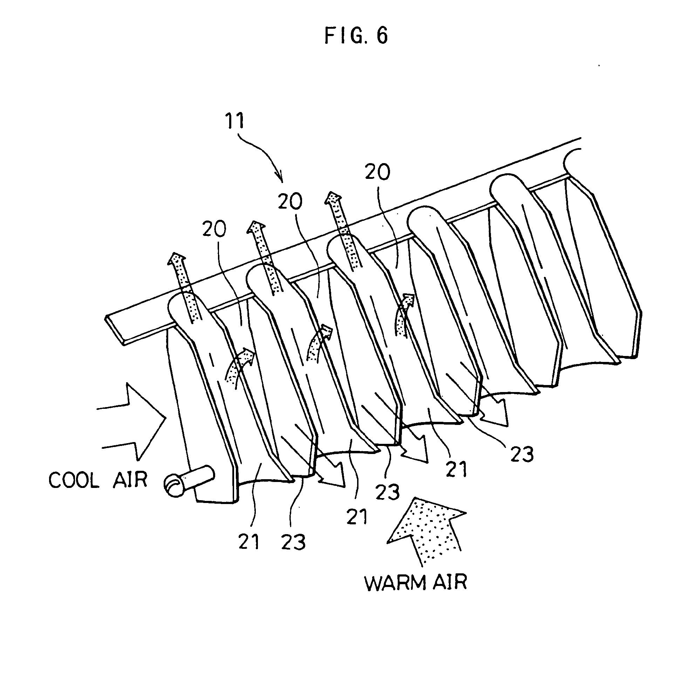

A baffle plate 11 proposed by the applicant of the present invention, which is shown in FIG. 6, is provided in an airconditioning system 1 for automobiles such as that shown in FIG. 5. The automotive airconditioning system 1 having an evaporator 3 and a heater core 4 disposed in this order starting on the upstream side of the supplied air inside an airconditioning case 2 also includes an air mix shutter 5 which guides part of or all of the cool air having been cooled at the evaporator 3 to the upstream side of the heater core 4.

The cool air guided into the heater core 4 is heated. The baffle plate 11 is disposed to mix the cool air and the warm air efficiently at a position at which a warm air passage 10 formed on the downstream side of the heater core 4 joins a cool air passage 6 through which cool air flows by bypassing the heater core 4. The cool air and the warm air are mixed with a high degree of reliability at the baffle plate 11 to achieve the required air temperature, and then the air achieving the desired temperature is let out through a defrost outlet 13, a vent outlet 14 or a foot outlet 15 in conformance to the selected outlet mode setting.

The baffle plate 11 utilized in the automotive airconditioning system 1 includes a plurality of cool air flow holes 20 that guide the cool air from the cool air passage 6 toward the vent outlet 14 and a plurality of warm air guide grooves 21 formed perpendicular to the cool air flow holes 20 and having open ends on the outlet side, which guide the warm air from the warm air passage 10 toward the defrost outlet, as shown in FIG. 6. It also includes openings 23 formed toward the warm air passage with the surfaces of the cool air flow holes 20.

While the baffle plate 11 allows the warm air to flow into the cool air flow holes 20 via the openings 23 as well as into the warm air guide grooves 21 from the warm air passage 10 in a bilevel mode and a defrost-and-heat mode, the cool air, which flows fast, reaches a foot passage 19 extending to the foot outlet 15 to push back the warm air, preventing the warm air from flowing toward the foot passage 19. As a result, the temperature at the floor level does not rise readily. This gives rise to a problem in that a predetermined difference in the temperature cannot be achieved between the temperature at the floor level and the air let out through the vent outlet or the defrost outlet.

Accordingly, an object of the present invention is to provide an airconditioning system for automobiles, having a baffle plate that achieves a smooth supply of warm air to a foot passage extending to a foot outlet in the bilevel mode and the defrost-and-heat mode.

In order to achieve the object described above, in an airconditioning system for automobiles according to the present invention having a baffle plate which is disposed at a position at which a cool air passage and a warm air passage join each other, the baffle plate includes a plurality of cool air flow holes that guide cool air from the cool air passage towards a vent outlet and a plurality of warm air guide grooves formed perpendicular to the cool air flow holes that guide warm air from the warm air passage toward a defrost outlet and are open to the outside, and the cool air flow holes each have an opening on the warm air passage side and each include a first cool air guide near the center thereof.

As a result, the cool air is guided with the first cool air guides and a flow of cool air toward the vent outlet is created, which, in turn, makes it possible to allow the warm air to travel from the warm air passage to a foot passage extending to a foot vent without creating a cool air flow that will push back in the warm air even when the bilevel mode or the defrost-and-heat mode is selected. Thus, the desired degree of difference in the temperature can be achieved between the air let out through the foot outlet and the air let out through the vent outlet or between the air let out through the foot outlet and the air let out through the defrost outlet.

In addition, the cool air flow holes may each be divided into two cool air flow holes by the first cool air guide, with one of the cool air flow holes separated from the other by the first cool air guide having an opening so as to communicate with the warm air passage, to achieve the object described above. In this case, an advantage is achieved in that with the flow regulated by the first cool air guide, the warm air is allowed to enter the one of the two separated cool air flow holes through the opening more readily.

Furthermore, second cool air guides may be provided at the cool air flow holes on the side toward the defrost outlet. In such a case, the second cool air guides work together with the first cool air guides to create a flow of cool air toward the vent outlet. It is to be noted that the first cool air guides and the second cool air guides both extend toward the vent outlet.

A sound absorbing member may be mounted at the surfaces of the warm air guide grooves located toward the evaporator, and a baffle plate adopting such a structure does not become a source of noise since the noise of the cool air impacting the outer sides of the warm air guide grooves is absorbed by the sound absorbing member and also the noise of the coolant flowing from the evaporator, the noise of the air current cut off at the fins and the like are absorbed by the sound absorbing member.

The baffle plate may be mounted at the airconditioning case via a means for fitting. In such a case, the baffle plate can be utilized with a high degree of efficiency as a passage in the space inside the airconditioning case.

The baffle plate may further include a means for displacement prevention. This means for displacement prevention, which is provided to prevent the baffle plate from being rotated via the means for fitting used to mount the baffle plate at the airconditioning case, may be a displacement preventing plate formed at the airconditioning case or may be provided at the baffle plate and be made to engage with the airconditioning case.

Further objects and advantages of the invention can be more fully understood from the following detailed description given in conjunction with the accompanying drawings. It shows:
FIG. 1 is a sectional view of an airconditioning system for automobiles achieved in an embodiment of the present invention;
FIG. 2 is a perspective of the baffle plate employed in the automotive airconditioning system shown in FIG. 1;
FIG. 3 shows the baffle plate employed in the automotive airconditioning system shown in FIG. 1, viewed from the warm air passage side;
FIG. 4 illustrates the flows of the warm air and the cool air relative to the baffle plate;
FIG. 5 is a sectional view of an automotive airconditioning system in the related art; and
FIG. 6 is a perspective illustrating the flows of the warm air and the cool air at the baffle plate employed in the automotive airconditioning system in the related art shown in FIG. 5.

The following is an explanation of an embodiment of the present invention, given in reference to the drawings.

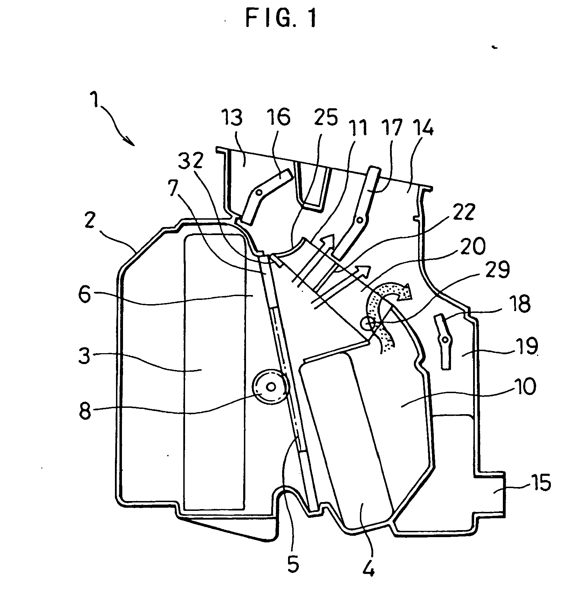

In an automotive airconditioning system having the baffle plate shown in FIG. 1, an evaporator 3 constituting a freezing cycle is installed longitudinally inside an airconditioning case 2. At the evaporator 3, having a cooling function, air supplied from an air blower (not shown) is cooled, and the cool air is supplied to a heater core 4 located on the downstream side relative to the evaporator.

An air mix shutter 5 located at a cool air passage 6 on the downstream side relative to the evaporator 3, through which cool air flows, adjusts the volume of cool air flowing to the heater core 4 on the downstream side. The air mix shutter 5, which is disposed inside a guide groove 7 formed at the airconditioning case 2 so as to run across the cool air passage 6, is made to move up/down via a pinion 8 rotated with a drive force applied from the outside.

Engine cooling water is supplied to the heater core 4 at which the cool air becomes heated as it passes through. The heater core 4 is located at a warm air passage 10 branching from the cool air passage 6. The warm air passage 10 joins the cool air passage 6 on its downstream side, and a baffle plate 11 is provided at the joining position to mix the cool air and the warm air efficiently.

On the downstream side of the baffle plate 11, a defrost outlet 13, a vent outlet 14 and a foot outlet 15 are formed, and mode doors 16, 17 and 18 respectively provided at the outlets 13, 14 and 15 are controlled to open/close in correspondence to the selected outlet mode to let out the conditioned air into the cabin through the open outlets.

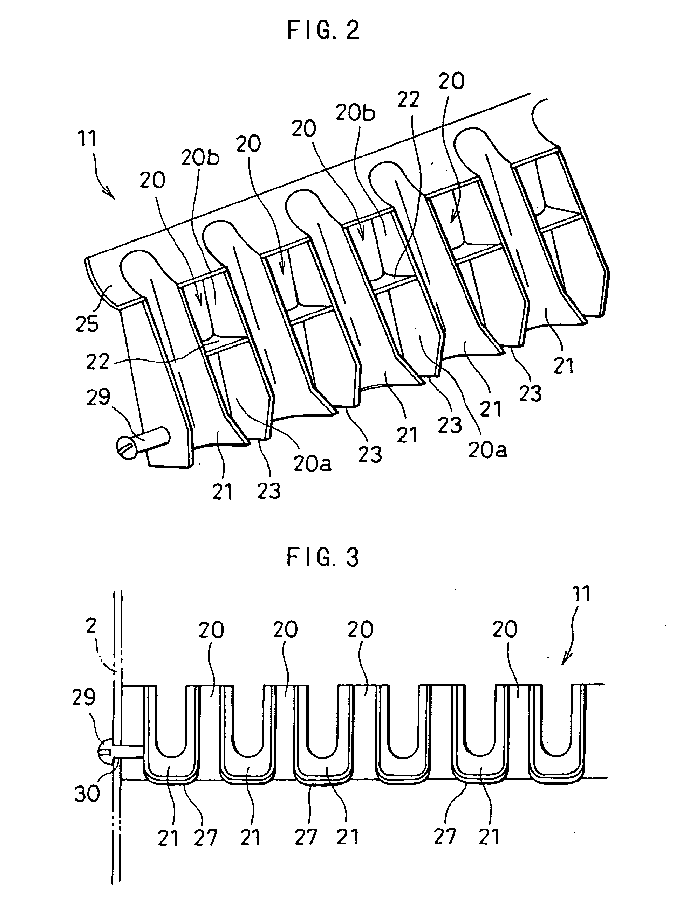

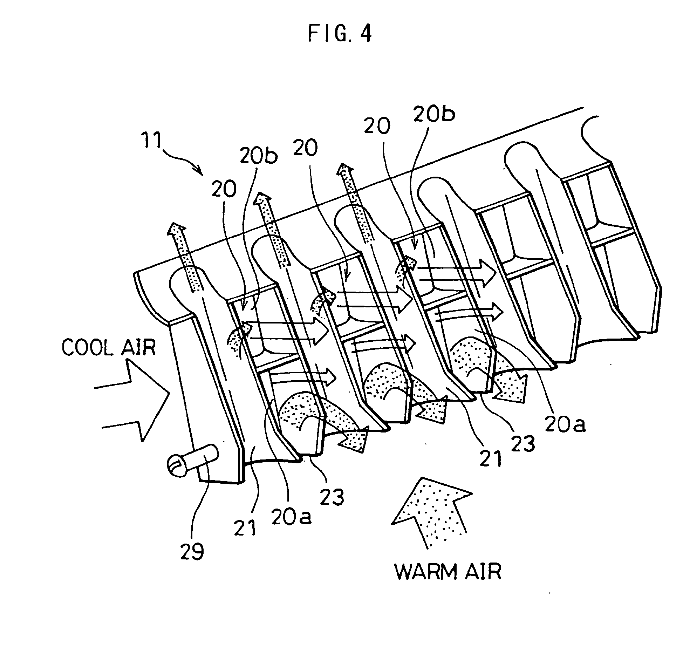

As shown in FIGS. 2 and 3, the baffle plate 11 includes numerous cool air flow holes 20 extending from the side near the cool air passage 6 toward the vent outlet 14 and numerous warm air guide grooves 21, and the cool air flow holes 20 and warm air guide grooves 21 are formed alternately. Around the middle of each of the cool air flow holes 20, a first guide 22 is formed so as to extend toward the vent outlet, and thus, the cool air flow hole 20 is divided by the first guide 22 into two separate cool air flow holes 20a and 20b.

In addition, an opening 23 is formed at one of the two separate cool air flow holes, i.e., the cool air pass hole 20a, on the side toward the warm air passage 10, so as to communicate with the warm air passage 10 as well as with the cool air passage 6. For this reason, warm air is supplied into the cool air pass hole 20a, as well.

The warm air guide grooves 21 are formed to extend from the side toward the warm air passage 10 to reach the defrost outlet 13 by intersecting the cool air flow holes 20 at a right angle, and each have an opening on the side toward the vent outlet 14. As a result, the warm air from the warm air passage 10 is guided toward the defrost outlet 13 through the warm air guide grooves 21 and also flows out in layers toward the vent outlet (toward the baffle plate downstream side) so that it is mixed with the layered cool air from the cool air flow holes 20 explained earlier to achieve the desired temperature. It is to be noted that the faster the warm air flows, the greater volume of warm air travels through the warm air guide grooves 21 toward the defrost outlet in proportion.

In addition, at the baffle plate 11, second cool air guides 25 are formed at the cool air flow holes 20 on the side toward the defrost outlet 13, and the second cool air guides 25 work together with the first cool air guides 22 to create a cool air flow toward the vent outlet 14. The second cool air guides 25 are formed in an arc shape.

The flows of the cool air and the warm air in the structure described above are now explained in reference to FIGS. 1 and 4. The air taken into the automotive airconditioning system 1 is cooled at the evaporator 3, and the volume of the cool air flowing to the heater core 4 is determined by the position to which the air mix shutter 5 is opened. The cool air passes through the heater core 4 where it is heated to become warm air, and the warm air is then mixed with the cool air via the baffle plate 11 to achieve the desired air temperature.

If the vent mode is currently selected, the vent outlet 14 is opened to let out the temperature controlled air obtained by mixing the cool air and the warm air through the outlet 14. If, on the other hand, the bilevel mode is currently selected, the vent outlet 14 and the foot outlet 15 are opened to achieve the cool air flow and the warm air flow shown in FIGS. 1 and 3. In this case, the cool air, in particular, is guided via the first and second guides 22 and 25 to flow toward the vent outlet as indicated by the solid arrows and, as a result, the warm air from the warm air passage 10 is caused to flow into the cool air flow holes 20a located further forward, as indicated by the dotted arrows, to travel to a foot passage 19 which extends to the foot outlet 15. With a sufficient volume of warm air supplied to the foot outlet 15, the temperature of the air let out through the foot outlet 15 can be raised relative to the temperature of the air let out through the vent outlet 14, thereby achieving a predetermined temperature difference.

In the defrost-and-heat mode, the defrost outlet 13 and the foot outlet 15 are opened, and the warm air is made to flow to the defrost outlet 13 through the warm air guide grooves 21. As in the bilevel mode explained above, cool air flow is created to allow the cool air to be guided by the first and second cool air guides 22 and 25 toward the vent outlet 14, and the warm air is allowed to flow to the foot passage 19 extending to the foot outlet 15, thereby achieving the desired output temperature.

Also, as shown in FIG. 3, a sound absorbing member 27 is attached to each warm air guide groove 21 on the side toward the cool air passage 6 (toward the evaporator) at the baffle plate 11. Thus, the noise of the cool air impacting the outer sides of the warm air guide grooves 21 while it passes through the cool air flow holes 20 is absorbed by the sound absorbing members 27, and an additional advantage is achieved in that the noise of the coolant flowing from the evaporator 3 and the noise of the air current cut off at the fins are also absorbed by the sound absorbing members. The baffle plate 11 is mounted at the airconditioning case 2 by fitting a pair of projections 29, which are formed at the side surfaces of the warm air guide grooves 21 on both ends, as shown in FIG. 2, at fitting holes 30 formed at the airconditioning case 2, as shown in FIG. 3.

In addition, a means for displacement prevention is provided to prevent rotation of the baffle plate 11, which is mounted at the airconditioning system 1 with a means for fitting constituted of the projections 29. Namely, a displacement preventing plate 32 is formed at the airconditioning case 2, as shown in FIG. 1. Alternatively, the means for displacement prevention may be constituted by providing a retaining piece at the baffle plate 11, and in such a case, a means for engaging the retaining piece to the airconditioning case 2 is provided.

As explained above, according to the present invention disclosed in claim 1, a cool air flow toward the vent outlet is created by guiding the cool air with the first cool air guides. As a result, no reverse flow of the warm air is created and instead, warm air is allowed to travel from the warm air passage to the foot passage which extends to the foot outlet to ensure that the temperature of the air let out through the foot outlet achieves a desired level in the bilevel mode and the defrost-and-heat mode. Consequently, the desired optimal temperature difference is achieved between the air let out through the foot outlet and the air let out through the vent outlet or between the air let out through the foot outlet and the air let out through the defrost outlet.

In addition, according to the invention disclosed in claim 2, the first cool air guides regulate the cool air flow, and allow the warm air to readily enter the cool air flow holes on one side through the openings. According to the invention disclosed in claim 3 or claim 4, the second cool air guides work together with the first cool air guides to direct the flow of the cool air toward the vent outlet.

According to the invention disclosed in claim 5, the sound absorbing members mounted at the warm air guide grooves at the baffle plate absorb the noise of the cool air impacting the warm air guide grooves to prevent noise generation, and also absorbs any noise originating from other devices. According to the invention disclosed in claim 6, the baffle plate is mounted at the airconditioning case 2 via the means for fitting and, as a result, the baffle plate can be utilized in an efficient manner as a passage running through the space inside the airconditioning case.

According to the invention disclosed in any of claims 7, 8 and 9, the baffle plate is held securely in place by the means for displacement prevention and thus, the baffle plate can be mounted at the airconditioning case via the means for fitting without any risk of the baffle plate becoming displaced.

Although the invention has been described in its preferred form with a certain degree of particularity, it is understood that the present disclosure of the preferred form may be changed in the details of construction and the combination and arrangement of parts without departing from the scope of the claims.

## Claims

1. An airconditioning system for automobiles, having:
a cool air passage;
a warm air passage; and
a baffle plate (11) disposed at a position at which said cool air passage and said warm air passage join each other, **characterized in:**
**that** said baffle plate includes a plurality of cool air flow holes (20) which guide cool air from said cool air passage toward a vent outlet and a plurality of warm air guide grooves (21) formed perpendicular to said cool air flow holes which guide warm air from said warm air passage to a defrost outlet and are open on the outlet side; and
**that** said cool air flow holes are each formed to open on the side toward said warm air passage **characterized in that** said cool air flow holes each include a first cool air guide (22) located near a center thereof.

2. An airconditioning system for automobiles according to claim 1, **characterized in:**
**that** each of said cool air flow holes (20) is divided into two separate cool air flow holes (20a, 20b) by said first cool air guide (22) and one of the two separate cool air flow holes 20a has an opening so as to communicate with said warm air passage (23).

3. An airconditioning system for automobiles according to claim 1, **characterized in:**
**that** a second cool air guide (25) is provided on the side toward said defrost outlet at each of said cool air flow holes.

4. An airconditioning system for automobiles according to claim 1 or 3, **characterized in:**
**that** said first cool air guide and said second cool air guide extend toward said vent outlet.

5. An airconditioning system for automobiles according to claim 1, **characterized in:**
**that** a sound absorbing member (27) is mounted at each of said warm air guide grooves on the side toward an evaporator.

6. An airconditioning system for automobiles according to claim 1, **characterized in;**
**that** said baffle plate is mounted at an airconditioning case via a means for fitting.

7. An airconditioning system for automobiles according to claim 1, **characterized in:**
**that** said baffle plate includes a means for displacement prevention.

8. An airconditioning system for automobiles according to claim 7, **characterized in:**
**that** said means for displacement prevention is a displacement preventing plate (32) formed at said airconditioning case.

9. An airconditioning system for automobiles according to claim 7, **characterized in:**
**that** said means for displacement prevention is provided at said baffle plate and is made to engage with said airconditioning case.

10. A baffle plate disposed at a position at which a cool air passage and a warm air passage in an automotive airconditioning system join each other and having a plurality of cool air flow holes that guide cool air from said cool air passage toward a vent outlet and a plurality of warm air guide grooves formed perpendicular to said cool air flow holes, which guide warm air from said warm air passage toward a defrost outlet and are open on the outlet side, **characterized in:**
**that** said cool air flow holes are each formed to open on the side toward said warm air passage **characterized in that** each include a first cool air guide located near a center thereof.

## Patentansprüche

1. Klimaanlage für Automobile, mit:
einem Kaltluftdurchlass;
einem Warmluftdurchlass; und
einer Ablenkplatte (11), die an einer Stelle angeordnet ist, an welcher der Kaltluftdurchlass und der Warmluftdurchlass zusammenlaufen, **dadurch gekennzeichnet:**
**dass** die Ablenkplatte mehrere Kaltluftstromlöcher (20), die kühle Luft aus dem Kaltluftdurchlass zu einem Ausströmer führen, und mehrere senkrecht zu den Kaltluftstromlöchern ausgebildete Warmluftführungskanäle (21) aufweist, welche warme Luft aus dem Warmluftdurchlass zu einem Entfrostungsauslass führen und auf der Auslassseite offen sind; und
**dass** die Kaltluftstromlöcher jeweils so ausgebildet sind, dass sie sich auf der Seite zum Warmluftdurchlass hin öffnen, **dadurch gekennzeichnet, dass** die Kaltluftstromlöcher jeweils eine in der Nähe einer Mitte davon angeordnete erste Kaltluftführung (22) aufweisen.

2. Klimaanlage für Automobile nach Anspruch 1, **dadurch gekennzeichnet:**
**dass** jedes der Kaltluftstromlöcher (20) durch die erste Kaltluftführung (22) in zwei separate Kaltluftstromlöcher (20a, 20b) aufgeteilt ist und dass eines der beiden separaten Kaltluftstromlöcher (20a) eine Öffnung hat, über die es mit dem Warmluftdurchlass (23) in Verbindung steht.

3. Klimaanlage für Automobile nach Anspruch 1, **dadurch gekennzeichnet:**
**dass** eine zweite Kaltluftführung (25) auf der Seite zum Entfrostungsauslass hin an jedem der Kaltluftstromlöcher vorgesehen ist.

4. Klimaanlage für Automobile nach Anspruch 1 oder 3, **dadurch gekennzeichnet:**
**dass** die erste Kaltluftführung und die zweite Kaltluftführung sich zum Ausströmer hin erstrecken.

5. Klimaanlage für Automobile nach Anspruch 1, **dadurch gekennzeichnet:**
**dass** an jedem der Warmluftführungskanäle an der Seite zu einem Verdampfer hin ein Schalldämpfungselement (27) angebracht ist.

6. Klimaanlage für Automobile nach Anspruch 1, **dadurch gekennzeichnet;**
**dass** die Ablenkplatte mittels einer Befestigung an einem Klimaanlagengehäuse angebracht ist.

7. Klimaanlage für Automobile nach Anspruch 1, **dadurch gekennzeichnet:**
**dass** die Ablenkplatte eine Einrichtung zum Verhindern einer Verschiebung aufweist.

8. Klimaanlage für Automobile nach Anspruch 7, **dadurch gekennzeichnet:**
**dass** die Einrichtung zum Verhindern einer Verschiebung eine am Klimaanlagengehäuse ausgebildete verschiebungsverhindernde Platte (32) ist.

9. Klimaanlage für Automobile nach Anspruch 7, **dadurch gekennzeichnet:**
**dass** die Einrichtung zum Verhindern einer Verschiebung an der Ablenkplatte vorgesehen und so ausgebildet ist, dass sie am Klimaanlagengehäuse angreift.

10. Ablenkplatte, die an einer Stelle angeordnet ist, an welcher ein Kaltluftdurchlass und ein Warmluftdurchlass in einer Kraftfahrzeug-Klimaanlage zusammenlaufen, und die mehrere Kaltluftstromlöcher, die kühle Luft aus dem Kaltluftdurchlass zu einem Ausströmer führen, und mehrere senkrecht zu den Kaltluftstromlöchern ausgebildete Warmluftführungskanäle hat, die warme Luft aus dem Warmluftdurchlass zu einem Entfrostungsauslass hin führen und auf der Auslassseite offen sind, **dadurch gekennzeichnet:**
**dass** die Kaltluftstromlöcher jeweils so ausgebildet sind, dass sie sich auf der Seite zum Warmluftdurchlass hin öffnen, **dadurch gekennzeichnet, dass** sie jeweils eine in der Nähe einer Mitte davon angeordnete erste Kaltluftführung aufweisen.

## Revendications

1. Système de conditionnement d'air pour automobiles, comprenant :
un passage d'air froid ;
un passage d'air chaud ; et
une plaque déflectrice (11) disposée à une position à laquelle le passage d'air froid et le passage d'air chaud se rejoignent, **caractérisé en ce que**:
la plaque déflectrice comprend plusieurs trous d'écoulement d'air froid (20) qui guident l'air froid du passage d'air froid vers une bouche d'air et plusieurs rainures de guidage d'air chaud (21) formées perpendiculairement aux trous d'écoulement d'air froid qui guident l'air chaud du passage d'air chaud vers une sortie de dégivrage et sont ouvertes du côté de la sortie ; et les trous d'écoulement d'air froid sont chacun formés pour s'ouvrir du côté situé vers le passage d'air chaud et **caractérisé en ce que** les trous d'écoulement d'air froid comprennent chacun un premier guide d'air froid (22) situé à proximité de leur centre.

2. Système de conditionnement d'air pour automobiles selon la revendication 1, **caractérisé en ce que** chacun des trous d'écoulement d'air froid (20) est divisé en deux trous d'écoulement d'air froid (20a, 20b) séparés par le premier guide d'air froid (22) et l'un des deux trous d'écoulement d'air froid (20a) séparés possède une ouverture pour communiquer avec le passage d'air chaud (23).

3. Système de conditionnement d'air pour automobiles selon la revendication 1, **caractérisé en ce qu'**un second guide d'air froid (25) est prévu du côté situé vers la sortie de dégivrage au niveau de chacun des trous d'écoulement d'air froid.

4. Système de conditionnement d'air pour automobiles selon la revendication 1 ou 3, **caractérisé en ce que** le premier guide d'air froid et le second guide d'air froid s'étendent vers la bouche d'air.

5. Système de conditionnement d'air pour automobiles selon la revendication 1, **caractérisé en ce qu'**un élément d'absorption de son (27) est monté au niveau de chacune des rainures de guidage d'air chaud du côté situé vers un évaporateur.

6. Système de conditionnement d'air pour automobiles selon la revendication 1, **caractérisé en ce que** la plaque déflectrice est monté au niveau d'un carter de conditionnement d'air via des moyens de montage.

7. Système de conditionnement d'air pour automobiles selon la revendication 1, **caractérisé en ce que** la plaque déflectrice comprend des moyens pour empêcher le déplacement.

8. Système de conditionnement d'air pour automobiles selon la revendication 7, **caractérisé en ce que** les moyens pour empêcher le déplacement sont une plaque (32) pour empêcher le déplacement formée au niveau du carter de conditionnement d'air.

9. Système de conditionnement d'air pour automobiles selon la revendication 7, **caractérisé en ce que** les moyens pour empêcher le déplacement sont prévus au niveau de la plaque déflectrice et sont réalisés pour se mettre en prise avec le carter de conditionnement d'air.

10. Plaque déflectrice disposée au niveau d'une position à laquelle un passage d'air froid et un passage d'air chaud dans un système de conditionnement d'air pour automobiles se rejoignent, comprenant plusieurs trous d'écoulement d'air froid qui guident l'air froid du passage d'air froid vers une bouche d'air et plusieurs rainures de guidage d'air chaud formées perpendiculairement aux trous d'écoulement d'air froid, qui guident l'air chaud du passage d'air chaud vers une sortie de dégivrage et sont ouvertes du côté de la sortie, **caractérisée en ce que** les trous d'écoulement d'air froid sont chacun formés pour s'ouvrir du côté situé vers le passage d'air chaud et **caractérisé en ce qu'**ils comprennent chacun un premier guide d'air froid situé à proximité de leur centre.
